# EUROPEAN PATENT APPLICATION

(11) **EP 3 822 144 A1**
(43) Date of publication of application: **19.05.2021**
(21) Application number: 20204530.8
(22) Date of filing: 29.10.2020
(51) Int. Cl.: B61H 13/24, B61H 5/00, B60T 13/36, F16D 55/224, F16D 65/18

(54) **BRAKE DEVICE**

(30) Priority: 12.11.2019 JP 2019204549
(71) Applicant: Nabtesco Corporation, Tokyo 102-0093 (JP)
(72) Inventor: OHNO, Tomoya, Chiyoda-ku, Tokyo 102-0093 (JP); UTSUMI, Takashi, Chiyoda-ku, Tokyo 102-0093 (JP)
(74) Representative: Grünecker Patent- und Rechtsanwälte PartG mbB

(57) **Abstract**

A brake device (50) includes a first cylinder (51) having a cylindrical shape. The first cylinder (51) contains a first piston (52) configured to move linearly along the axial direction of the first cylinder (51). The first piston (52) has fixed thereto an output shaft (53) configured to move linearly along the axial direction of the first cylinder (51). The output shaft (53) is coupled with a rotating lever (55). When the output shaft (53) moves linearly, the rotating lever (55) rotates by converting the linear movement of the output shaft (53) into a rotational movement. A roller (58) of the rotating lever (55) is inserted in an insertion hole (53A) of the output shaft (53) and contacts with an inner peripheral surface of the insertion hole (53A) at a changing contact position. The rotating lever (55) is coupled with a rotating arm (60A). The rotating arm (60A) has attached thereto a mounting portion (65) to which a brake pad (86) is fixed.

## Description

The present disclosure relates to a brake device.

International Publication No. WO 2012/123316 (hereinafter "the '316 publication") discloses a disc brake device for use in railway vehicles. This brake device includes a cylinder having a tubular shape. The cylinder contains a piston configured to move within the cylinder. An output shaft is fixed to the piston. The piston and the output shaft are capable of tilting relative to the central axis of the cylinder. The distal end portion of the output shaft is coupled with one end portion of a rotating lever supported rotatably. The brake device also includes a pair of rotating arms configured to sandwich a disc fixed to an axle. One of the pair of rotating arms is coupled with the other end portion of the rotating lever. Further, brake pads are attached to these rotating arms.

In the brake device of the '316 publication, as the internal pressure of the cylinder increases, the piston moves so that the output shaft projects. Accordingly, the rotating lever coupled with the output shaft rotates, causing the rotating arms to rotate. As the rotating arms rotate, the brake pads are moved toward the disc. When the brake pads are contacted with and urged against the disc, a brake force acts on the disc.

In the brake device of the '316 publication, the force of the output shaft pressing the rotating lever includes a force acting in the tangential direction of the rotating lever. This force acts as a force for rotating the rotating lever, or a rotating torque. However, in the brake device of the '316 publication, as the rotating lever rotates to change its rotational position, the output shaft tilts. Therefore, the direction in which the output shaft presses the rotating lever is not fixed, and the rotating torque of the rotating lever varies in accordance with the rotational position of the rotating lever.

The present invention is made in light of the above, and one object thereof is to inhibit the variation of the rotating torque by which the output shaft rotates the rotating lever.

A brake device according to an aspect of the present disclosure includes: an output shaft configured to move linearly along an axial direction of a cylinder together with a piston; and a rotating lever for driving a rotating arm by a force received from the output shaft, the rotating arm being configured to change relative positions of a friction member and a brake-applied member relative to each other, wherein the rotating lever includes a lever contact portion configured to contact with the output shaft at a contact position changing while the output shaft moves linearly.

With the above configuration, the contact position between the lever contact portion of the rotating lever and the output shaft changes in accordance with the rotational position of the rotating lever, and therefore, the operation direction of the output shaft is constantly the same. Further, with the above configuration, as the tilt of the output shaft relative to the tangential direction of the rotating lever is larger, and thus a force acting from the output shaft in the tangential direction of the rotating lever is smaller, the distance from the rotation center of the rotating lever to the contact position between the rotating lever and the output shaft is larger. Therefore, it is possible to inhibit the variation of the rotating torque by which the output shaft rotates the rotating lever.

In the above configuration, it is possible that a contact portion of the output shaft and a contact portion of the lever contact portion are in line contact or point contact with each other, and at least one of the contact portion of the output shaft and the contact portion of the lever contact portion includes a curved surface portion having a curved surface. With the above configuration, it is possible to reduce the resistance produced when the contact position between the output shaft and the lever contact portion of the rotating lever changes, as compared to, for example, the configuration in which the lever contact portion of the rotating lever is in surface contact with the output shaft.

In the above configuration, it is possible that at least one of the output shaft and the lever contact portion includes a rotating body configured to rotate. With the above configuration, the rotating body rotates when the contact position between the output shaft and the rotating lever changes. Therefore, it is possible to reduce the resistance produced when the contact position between the output shaft and the rotating lever changes.

In the above brake device, it is possible that the rotating lever is configured to rotate about a rotation center, and with a projection direction referring to a direction toward which the output shaft projects from the cylinder in the axial direction of the cylinder, and a counter projection direction referring to a direction opposite to the projection direction, the rotating lever is positioned such that the contact position between the output shaft and the lever contact portion changes within a range from a position on a counter projection direction side relative to the rotation center of the rotating lever to a position on a projection direction side relative to the rotation center of the rotating lever.

With the above configuration, the range of rotation of the rotating lever can be larger as compared to the configuration in which the contact position between the output shaft and the rotating lever changes only in the region on the projection direction side relative to the rotation center of the rotating lever, for the same contact range in which the output shaft and the rotating lever contact with each other.

In the above brake device, it is possible that the piston includes: a diaphragm partitioning an inner space of the cylinder in the axial direction of the cylinder; and a guide portion extending from an outer edge of the diaphragm in the axial direction of the cylinder.

With the above configuration, it is possible to inhibit the piston from shaking relative to the axial direction of the cylinder when the piston moves linearly. This facilitates linear movement of the output shaft along the axial direction of the cylinder.

In the above brake device, it is possible that, with a projection direction referring to a direction toward which the output shaft projects from the cylinder in the axial direction of the cylinder, and a counter projection direction referring to a direction opposite to the projection direction, the rotating lever rotates in one direction while the output shaft moves linearly toward the projection direction, whereas the rotating lever rotates in the other direction while the output shaft moves linearly toward the counter projection direction. With the above configuration, rotation of the rotating lever in both directions can be accomplished by the linear movement of the output shaft.

In the above brake device, it is possible that the output shaft includes: a first contact portion configured to contact with the rotating lever at a cylinder side in the axial direction of the cylinder; and a second contact portion configured to contact with the rotating lever at an opposite side to the cylinder in the axial direction of the cylinder.

With the above configuration, when the output shaft projects, the first contact portion of the output shaft contacts with the rotating lever to rotate the rotating lever. On the other hand, when the output shaft withdraws, the second contact portion of the output shaft contacts with the rotating lever to rotate the rotating lever in the opposite direction. In this way, rotation of the rotating lever in both directions can be accomplished only by contact with the output shaft, and therefore, it can be prevented that the configuration around the output shaft and the rotating lever are complicated.

In the above brake device, it is possible that the output shaft moves linearly in the axial direction of the cylinder as a fluid is fed into and discharged from the cylinder, the brake device further includes: a drive shaft positioned coaxially with the output shaft on an opposite side to the rotating lever with respect to the output shaft; and an elastic member for pressing the drive shaft toward the output shaft in the axial direction of the cylinder, and when a pressing force of the elastic member causes the drive shaft to force the output shaft or the piston toward a rotating lever side in the axial direction of the cylinder, the output shaft is capable of moving linearly toward the rotating lever side, irrespective of a fluid pressure in the cylinder.

With the above configuration, the drive shaft causes the output shaft to move linearly, irrespective of a fluid pressure in the cylinder. Accordingly, with the above configuration, even when no fluid is fed into the cylinder, and the drive force from the output shaft produced by the fluid pressure is not transmitted to the rotating lever, the drive force from the drive shaft is transmitted via the output shaft to the rotating lever, and it is possible to inhibit the variation of the rotating torque for rotating the rotating lever by the drive force from the drive shaft.
Fig. 1 is a schematic view showing a schematic configuration of a vehicle.
Fig. 2 is a partially sectional view of a brake device not applying a brake.
Fig. 3 is a partially sectional view of the brake device applying a brake.
Fig. 4 illustrates an output shaft and a rotating lever.

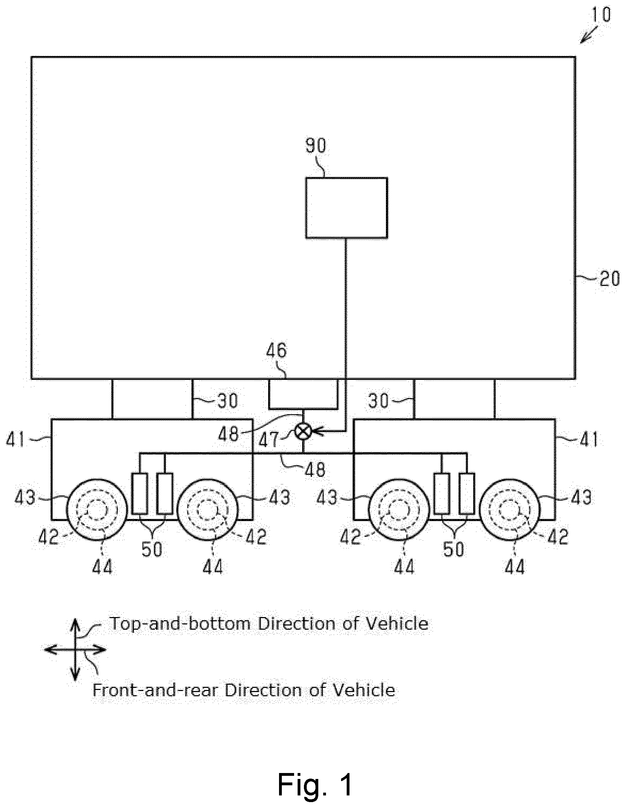

The following describes one embodiment of a brake device with reference to Figs. 1 to 4. A description will be first given of a schematic configuration of one of a plurality of vehicles of a railway train.

As shown in Fig. 1, the vehicle 10 includes two bogies 41 spaced away from each other in the front-and-back direction of the vehicle 10 (the left-and-right direction in Fig. 1). Each bogie 41 has axles 42 attached thereto in a rotatable manner. The axles 42 extend in the width direction of the vehicle (the depth direction in Fig. 1). Each bogie 41 has two axles 42 that are spaced away from each other in the front-and-back direction of the vehicle. On both ends of each axle 42, wheels 43 substantially shaped like a disc are fixed. Between the two wheels 43 of each axle 42, two discs 44 having a substantially circular shape are fixed. The two discs 44 are spaced away from each other in the width direction. Accordingly, each bogie 41 has four wheels 43 and four discs 44. The discs 44 are brake-applied members.

An air suspension 30, which utilizes elastic force provided by compressed air to absorb the vibration, is attached on the upper side of each bogie 41. A vehicle body 20 is attached on the upper side of the air suspensions 30. The vehicle body 20 bounds an in-vehicle space. The vehicle body 20 is generally shaped like a rectangular parallelepiped box and has a longer dimension in the front-and-back direction of the vehicle.

Brake devices 50 are attached to each bogie 41. The brake devices 50 are designed to brake the rotation of the discs 44. Each of the brake devices are formed of a caliper brake in what is called a disc brake device, designed to brake rotation of the disc 44 with a pair of brake pads 86 operated to sandwich the disc 44. The vehicle 10 has, in total, eight brake devices 50 attached thereto, which correspond to the eight discs 44. Fig. 1 only shows four discs 44 and four brake devices 50, which are positioned on one of the sides in the width direction of the vehicle.

The vehicle 10 has an air supply source 46 installed thereon. The air supply source 61 is configured to supply compressed air. The air supply source 46 has a supply channel 48 extending therefrom. The supply channel 48 branches into eight in the middle, and each branch channel is connected to one of the eight brake devices 50. To the supply channel 48, a control valve 47 is attached that is configured to control the amount of the compressed air distributed through the supply channel 48. The control valve 47 is arranged on the air supply source 46 side with respect to the origin of branches in the supply channel 48. This means that one control valve 47 is provided for eight brake devices 50. The control valve 47 is controlled by a control device 90. The air supply source 46 also has the air suspensions 30 connected thereto through a channel, which is not shown. The air suspensions 30 receive compressed air supplied from the air supply source 46.

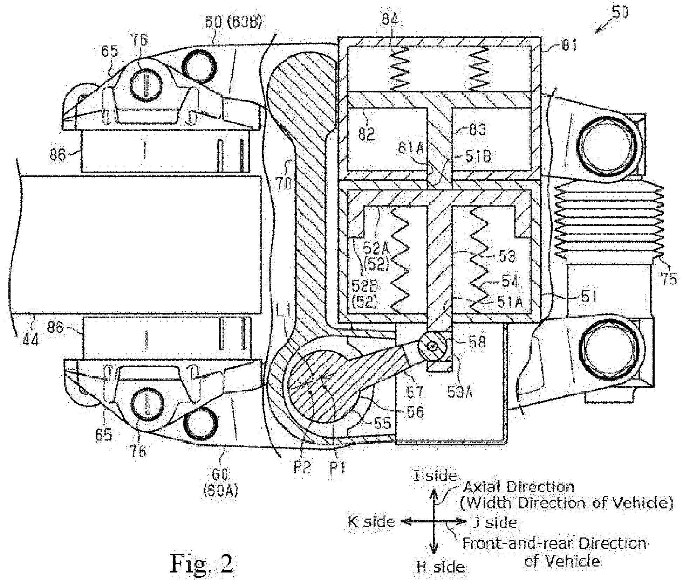

Next, the configuration of the brake device 50 will be described. As shown in Fig 2, the brake device 50 includes a first cylinder 51 having an external appearance shaped like a circular column. The central axis of the first cylinder 51 extends along the width direction of the vehicle. The first cylinder 51 has a cylindrical inner space defined therein. The bottom portion of the first cylinder 51 on the H side in the axial direction (the lower side in Fig. 2) is penetrated by a through-hole 51A. The through-hole 51A is positioned at the center of the bottom portion of the first cylinder 51 on the H side in the axial direction. The bottom portion of the first cylinder 51 on the I side in the axial direction (the upper side in Fig. 2) is penetrated by a through-hole 51B. The through-hole 51B is positioned at the center of the bottom portion of the first cylinder 51 on the I side in the axial direction. The first cylinder 51 is fixed to a bracket 70 extending in the axial direction of the first cylinder 51. The bracket 70 is supported on the bogie 41 so as to be swingable relative to the bogie 41. Accordingly, the first cylinder 51 is supported on the bogie 41 via the bracket 70.

The first cylinder 51 contains a first piston 52 configured to move linearly along the axial direction of the first cylinder 51. The first piston 52 includes a diaphragm 52A substantially shaped like a disc. The outer diameter of the diaphragm 52A is substantially the same as the inner diameter of the first cylinder 51. The diaphragm 52A partitions the inner space of the first cylinder 51 into two parts in the axial direction of the first cylinder 51. The first piston 52 also includes a guide portion 52B extending from the outer edge of the diaphragm 52A toward the H side in the axial direction. The guide portion 52B extends from the entire periphery of the outer edge of the diaphragm 52A and generally has an annular shape. The outer peripheral surface of the guide portion 52B is in contact with the inner peripheral surface of the first cylinder 51.

From the center of the diaphragm 52A of the first piston 52, an output shaft 53 shaped like a circular column extends toward the H side in the axial direction. The first piston 52 and the output shaft 53 are formed integrally with each other. The output shaft 53 moves linearly along the axial direction of the first cylinder 51 together with the first piston 52. The distal end portion of the output shaft 53 extends through the through-hole 51A of the first cylinder 51 to the outside of the first cylinder 51. The distal end portion of the output shaft 53 is penetrated by an insertion hole 53A in the direction perpendicular to the central axis of the output shaft 53. A projection direction in which the output shaft 53 projects from the first cylinder 51 is toward the H side in the axial direction. An anti-projection direction opposite to the projection direction is toward the I side in the axial direction.

The first cylinder 51 contains a first spring 54 configured to press the first piston 52 from the H side in the axial direction toward the I side in the axial direction within the first cylinder 51. The first spring 54 is positioned between the bottom portion of the first cylinder 51 on the H side in the axial direction and the diaphragm 52A of the first piston 52. The space within the inner space of the first cylinder 51 positioned on the I side of the first piston 52 in the axial direction communicates with the inner space of the supply channel 48. Accordingly, the compressed air from the air supply source 46 can be introduced into the space within the inner space of the first cylinder 51 positioned on the I side of the first piston 52 in the axial direction.

A second cylinder 81 having an external appearance shaped like a circular column is fixed to the bottom portion of the first cylinder 51 on the I side in the axial direction. The central axis of the second cylinder 81 is coaxial with the central axis of the first cylinder 51. The second cylinder 81 has a cylindrical inner space defined therein. The bottom portion of the second cylinder 81 on the H side in the axial direction is penetrated by a through-hole 81A. The through-hole 81A is positioned at the center of the bottom portion of the second cylinder 81 on the H side in the axial direction and is in communication with the through-hole 51B of the first cylinder 51.

The second cylinder 81 contains a second piston 82 configured to move linearly along the axial direction of the second cylinder 81. The second piston 82 is substantially shaped like a disc. The outer diameter of the second piston 82 is substantially the same as the inner diameter of the second cylinder 81. The second piston 82 partitions the inner space of the second cylinder 81 into two parts in the axial direction of the second cylinder 81.

From the center of the second piston 82, a drive shaft 83 shaped like a circular column extends toward the H side in the axial direction. The second piston 82 and the drive shaft 83 are formed integrally with each other. The drive shaft 83 extends through the through-hole 81A of the second cylinder 81 and the through-hole 51B of the first cylinder 51. The drive shaft 83 is positioned coaxially with the output shaft 53 on the opposite side to the rotating lever 55 in the axial direction of the first cylinder 51 The drive shaft 83 is capable of moving linearly along the axial direction of the second cylinder 81 together with the second piston 82.

The second cylinder 81 contains a second spring 84 configured to press the second piston 82 from the I side in the axial direction toward the H side in the axial direction within the second cylinder 81. The second spring 84 is positioned between the bottom portion of the second cylinder 81 on the I side in the axial direction and the second piston 82. The pressing force of the second spring 84 is larger than the pressing force of the first spring 54. The second spring 84 is an elastic member that presses the drive shaft 83 toward the output shaft 53 in the axial direction of the first cylinder 51. The space within the inner space of the second cylinder 81 positioned on the H side of the second piston 82 in the axial direction communicates with the inner space of the supply channel 48. Accordingly, the compressed air from the air supply source 46 can be introduced into the space within the inner space of the second cylinder 81 positioned on the H side of the second piston 82 in the axial direction.

The output shaft is coupled with the rotating lever 55. When the output shaft 53 moves linearly, the rotating lever 55 rotates by converting the linear movement of the output shaft 53 into a rotational movement. The rotating lever 55 includes a circular portion 56 having a circular shape in plan view. The central axis of this circle extends along the top-and-bottom direction of the vehicle of Fig. 1 (the depth direction in Fig. 2). The circular portion 56 is rotatably supported on the end portion of the bracket 70 on the H side in the axial direction. The central axis of the circular portion 56 constitutes the rotation center P1 of the rotating lever 55. A lever body 57 substantially shaped like a rod extends from the outer peripheral surface of the circular portion 56. The rotating lever 55 also includes a roller 58 that rotates relative to the lever body 57. The roller 58 is supported on the distal end portion of the lever body 57. The roller 58 is substantially shaped like a circular column and configured to rotate about the central axis thereof. Specifically, the roller 58 is a roller follower having a built-in bearing. The central axis of the roller 58 is orthogonal to the axial direction of the first cylinder 51 and is parallel with the central axis of the circular portion 56. The distal end portion of the lever body 57 and the roller 58 are inserted in the insertion hole 53A of the output shaft 53. Since the roller 58 is substantially shaped like a circular column, the roller 58 serves as a curved surface portion having a curved surface. The roller 58 also serves as a rotating body.

With the distal end portion of the lever body 57 and the roller 58 inserted in the insertion hole 53A of the output shaft 53, when the output shaft 53 moves linearly toward the H side in the axial direction, the portion of the inner peripheral surface of the insertion hole 53A on the I side in the axial direction contacts with the roller 58. Accordingly, the portion of the inner peripheral surface of the insertion hole 53A on the I side in the axial direction serves as a first contact portion that contacts with the roller 58, which is a part of the rotating lever 55, at the first cylinder 51 side in the axial direction. The roller 58 comes into line contact with the portion of the inner peripheral surface of the insertion hole 53A on the I side in the axial direction. With the distal end portion of the lever body 57 and the roller 58 inserted in the insertion hole 53A of the output shaft 53, when the output shaft 53 moves linearly toward the I side in the axial direction, the portion of the inner peripheral surface of the insertion hole 53A on the H side in the axial direction contacts with the roller 58. Accordingly, the portion of the inner peripheral surface of the insertion hole 53A on the H side in the axial direction serves as a second contact portion that contacts with the roller 58, which is a part of the rotating lever 55, at the opposite side to the first cylinder 51 in the axial direction. The roller 58 comes into line contact with the portion of the inner peripheral surface of the insertion hole 53A on the H side in the axial direction. In this way, the output shaft 53 and the rotating lever 55 are in contact with each other such that the linear movement of the output shaft 53 and the rotational movement of the rotating lever 55 are possible. In other words, the output shaft 53 and the rotating lever 55 are in contact with each other with two degrees of freedom, the straight-line pair and the rotation pair.

When the first piston 52 has reached its most proximal position on the I side in the axial direction, the contact position between the output shaft 53 and the roller 58 of the rotating lever 55 is positioned on the I side relative to the rotation center P1 of the rotating lever 55 in the axial direction. When the first piston 52 has reached its most distal position on the H side in the axial direction, the contact position between the output shaft 53 and the roller 58 of the rotating lever 55 is positioned on the H side relative to the rotation center P1 of the rotating lever 55 in the axial direction. Briefly, the rotating lever 55 is positioned such that the contact position between the output shaft 53 and the roller 58 of the rotating lever 55 changes within a range from a position on the I side in the axial direction relative to the rotation center P1 of the rotating lever 55 to a position on the H side in the axial direction relative to the rotation center P1 of the rotating lever 55. In the brake device 50, a force is transmitted from the output shaft 53 to the rotating lever 55, while the roller 58 of the rotating lever 55 changes its contact position with the inner peripheral surface of the insertion hole 53A of the output shaft 53. Therefore, the transmission of the force from the output shaft 53 to the rotating lever 55 is limited to the range in which the roller 58 of the rotating lever 55 and the inner peripheral surface of the insertion hole 53A of the output shaft 53 can contact with each other. The roller 58 contacts with the inner peripheral surface of the insertion hole 53A of the output shaft 53 at a contact position changing during the linear movement of the output shaft 53, and therefore, the roller 58 serves as a lever contact portion of the rotating lever 55.

The circular portion 56 of the rotating lever 55 is coupled with a rotating arm 60 configured to rotate by the drive force received from the output shaft 53 to change the relative positions of the brake pad 86 and the disc 44 relative to each other. The coupling center P2, which is the center of a coupling portion between the rotating arm 60 and the rotating lever 55, is eccentric to the rotation center P1 of the rotating lever 55. Specifically, the coupling center P2 is positioned opposite to the lever body 57 with respect to the rotation center P1. Since the rotating arm 60 is coupled within the region of the circular portion 56, the distance L1 from the rotation center P1 of the rotating lever 55 to the coupling center P2 between the rotating arm 60 and the rotating lever 55 is smaller than the shortest distance from the rotation center P1 of the rotating lever 55 to the contact position between the output shaft 53 and the roller 58 of the rotating lever 55. In addition, as described above, the circular portion 56 of the rotating lever 55 is rotatably supported on the end portion of the bracket 70 on the H side in the axial direction. The rotating arm 60 is thus coupled via the rotating lever 55 with the end portion of the bracket 70 on the H side in the axial direction.

The rotating arm 60 extends toward both sides substantially in the front-and-back direction of the vehicle (the left-and-right direction in Fig. 2) with the coupling center P2 interposed therebetween. The proximal end of the rotating arm 60 is positioned on the J side of the first cylinder 51 in the front-and-back direction of the vehicle. The distal end of the rotating arm 60 is positioned on the K side of the bracket 70 in the front-and-back direction of the vehicle.

The distal end portion of the rotating arm 60 is coupled with a mounting portion 65 via a coupling pin 76. The mounting portion 65 is positioned on the I side of the rotating arm 60 in the axial direction of the first cylinder 51. The mounting portion 65 is swingable about the coupling pin 76. In plan view from the direction of the swing axis of the mounting portion 65, the mounting portion 65 has a substantially triangular shape which is larger in dimension toward the I side in the axial direction of the first cylinder 51. A brake pad 86 is fixed to the surface of the mounting portion 65 on the I side in the axial direction. The brake pad 86 has a substantially flat plate-like shape in conformity to the end surface of the disc 44. The brake pad 86 is a brake friction material configured to be urged against the disc 44 to produce a braking force by a frictional force.

Another rotating arm 60 is rotatably coupled with the end portion of the bracket 70 on the I side in the axial direction. The rotating arm 60 positioned on the I side in the axial direction also has a mounting portion 65 coupled therewith, and another brake pad 86 is fixed to this mounting portion 65. The rotating arm 60, the mounting portion 65, and the brake pad 86 positioned on the I side in the axial direction are arranged in line symmetry with but otherwise configured in the same manner as those positioned on the H side in the axial direction. The rotating arm 60, the mounting portion 65, and the brake pad 86 positioned on the I side in the axial direction are denoted by the same signs and will not be described herein. When it is necessary to distinguish the two rotating arms 60, different signs are used as follows: the rotating arm 60 positioned on the H side in the axial direction is referred to as the rotating arm 60A, whereas the rotating arm 60 positioned on the I side in the axial direction is referred to as the rotating arm 60B.

The proximal end portions of the two rotating arms 60 are coupled with each other via a gap adjustment mechanism 75 for adjusting the gap between the distal end portions of the two rotating arms 60. The proximal end portions of the rotating arms 60 are rotatably coupled with the gap adjustment mechanism 75. Although not shown in detail, the gap adjustment mechanism 85 contains a built-in spring. As this spring rotates, the distance between the proximal end portions of the two rotating arms 60 varies. The two rotating arms 60 thus rotate about the respective coupling portions with the bracket 70, such that the gap between the distal end portions of the two rotating arms 60 varies.

The brake device 50 configured as described above is fixed to the bogie 41 such that the disc 44 is positioned between the distal end portions of the two rotating arms 60. The brake device 50 is positioned such that the axial direction of the first cylinder 51 corresponds to the width direction of the vehicle. The gap adjustment mechanism 75 is operated in accordance with the degree of wear of the brake pads 86 of the brake device 50 to adjust the gap between the distal end portions of the two rotating arms 60.

The operation of the brake device 50 configured as described above will be described. While the vehicle 10 is traveling, the compressed air is introduced into the space within the inner space of the second cylinder 81 positioned on the H side of the second piston 82 in the axial direction. With the compressed air introduced in this way, the second piston 82 and the drive shaft 83 move toward the I side in the axial direction against the pressing force of the second spring 84, such that the drive force from the drive shaft 83 produced by the pressing force of the second spring 84 is not transmitted to the output shaft 53. Accordingly, assuming that the drive force from the drive shaft 83 is not transmitted to the output shaft 53, the following describes the operation of the brake device 50.

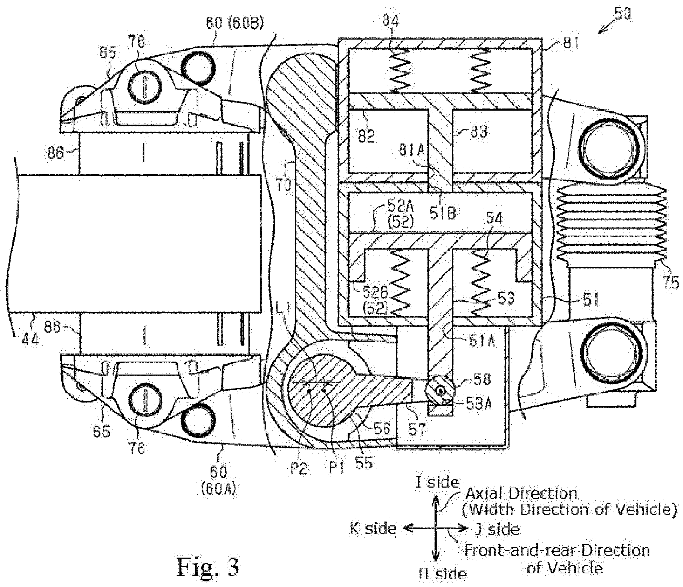

When the compressed air is introduced into the space within the inner space of the first cylinder 51 positioned on the I side of the first piston 52 in the axial direction, the first piston 52 and the output shaft 53 moves linearly toward the H side in the axial direction against the pressing force of the first spring 54, as shown in Fig. 3. The portion of the inner peripheral surface of the insertion hole 53A of the output shaft 53 on the I side in the axial direction contacts with the roller 58 of the rotating lever 55. The roller 58 of the rotating lever 55 then moves toward the H side in the axial direction, while gradually changing the contact position with the portion of the inner peripheral surface of the insertion hole 53A of the output shaft 53 on the I side in the axial direction. As the roller 58 moves in this manner, the rotating lever 55 rotates about the rotation center P1 in one direction, or clockwise as viewed in Fig. 3. At this time, the coupling center P2 between the rotating arm 60A positioned on the H side in the axial direction and the rotating lever 55 also rotates clockwise about the rotation center P1. Therefore, the rotating arm 60A receives a force acting toward the I side in the axial direction at the coupling center P2. As a result, the rotating arm 60A moves toward the I side in the axial direction. The mounting portion 65 and the brake pad 86 coupled with the rotating arm 60A move closer to the disc 44, such that the brake pad 86 on the rotating arm 60A side contacts with the end surface of the disc 44.

In addition, as described above, the movement of the rotating arm 60A toward the I side in the axial direction causes the gap adjustment mechanism 75 to move toward I side in the axial direction. Also, the coupling portion between the proximal end portion of the rotating arm 60B and the gap adjustment mechanism 75 moves toward the I side in the axial direction. At substantially the middle portion of the rotating arm 60B in the extension direction thereof, the rotating arm 60B is rotatably coupled with the bracket 70. Therefore, the rotating arm 60B rotates counterclockwise about the coupling portion between the rotating arm 60B and the bracket 70. The mounting portion 65 and the brake pad 86 coupled with the rotating arm 60B move closer to the disc 44, such that the brake pad 86 on the rotating arm 60B side contacts with the end surface of the disc 44. The disc 44 is sandwiched in the axial direction of the first cylinder 51 between the brake pad 86 on the rotating arm 60A side and the brake pad 86 on the rotating arm 60B side, thereby braking the rotation.

On the other hand, when the compressed air is not introduced into the space within the inner space of the first cylinder 51 positioned on the I side of the first piston 52 in the axial direction, such that the pressure in this space reduces, the first piston 52 and the output shaft 53 moves linearly toward the I side in the axial direction by the pressing force of the first spring 54, as shown in Fig. 2. The portion of the inner peripheral surface of the insertion hole 53A of the output shaft 53 on the H side in the axial direction contacts with the roller 58 of the rotating lever 55. The roller 58 of the rotating lever 55 then moves toward the I side in the axial direction, while gradually changing the contact position with the portion of the inner peripheral surface of the insertion hole 53A of the output shaft 53 on the H side in the axial direction. As the roller 58 moves in this manner, the rotating lever 55 rotates about the rotation center P1 in the other direction, or counterclockwise as viewed in Fig. 2. At this time, the coupling center P2 between the rotating arm 60A and the rotating lever 55 also rotates counterclockwise about the rotation center P1. Therefore, the rotating arm 60A receives a force acting toward the H side in the axial direction at the coupling center P2. As a result, the rotating arm 60A moves toward the H side in the axial direction. The mounting portion 65 and the brake pad 86 coupled with the rotating arm 60A move away from the disc 44, such that the brake pad 86 on the rotating arm 60A side separates from the end surface of the disc 44.

In addition, as described above, the movement of the rotating arm 60A toward the H side in the axial direction causes the gap adjustment mechanism 75 to move toward H side in the axial direction. Also, the coupling portion between the proximal end portion of the rotating arm 60B and the gap adjustment mechanism 75 moves toward the H side in the axial direction. Therefore, the rotating arm 60B rotates clockwise about the coupling portion between the rotating arm 60B and the bracket 70. The mounting portion 65 and the brake pad 86 coupled with the rotating arm 60B move away from the disc 44, such that the brake pad 86 on the rotating arm 60B side separates from the end surface of the disc 44.

The following describes how the force is transmitted when the brake device 50 brakes the disc 44. The following description is simplified by supposing that the output shaft 53 is in contact with the roller 58 of the rotating lever 55 at a contact point Y1 in the central axis of the output shaft 53. It is also supposed that a force F1 of the output shaft 53 for moving toward the projection direction is constant.

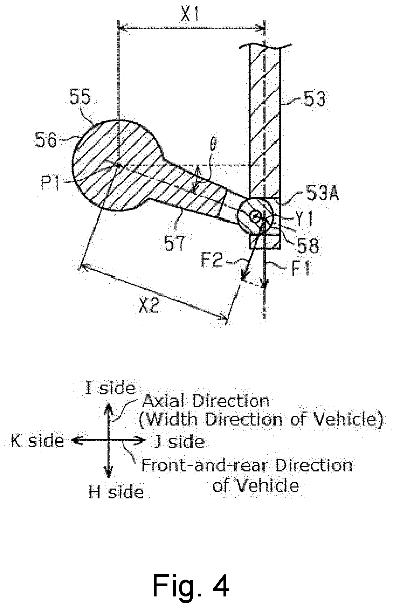

As shown in Fig. 4, the tilt angle θ of the rotating lever 55 is determined relative to the state in which the lever body 57 of the rotating lever 55 extends in the direction orthogonal to the axial direction of the output shaft 53. A force F2 in the tangential direction acting from the output shaft 53 onto the rotating lever 55 is expressed by "F1 × cosθ."

Although the output shaft 53 can move in the axial direction thereof, it cannot tilt or move in a direction orthogonal to the axial direction thereof. Therefore, the distance X1 between the rotation center P1 of the rotating lever 55 and the central axis of the output shaft 53 is constant. The distance X2 from the rotation center P1 of the rotating lever 55 to the contact point Y1 between the rotating lever 55 and the output shaft 53 is expressed by "X1 / cosθ."

The force of the output shaft 53 for rotating the rotating lever 55, or the rotating torque is expressed by a product of the force F2 in the tangential direction and the distance X2, that is, "F1 × cosθ × X1 / cosθ = F1 × X1." As described above, the distance X1 between the rotation center P1 of the rotating lever 55 and the central axis of the output shaft 53 is constant. Accordingly, if the force F1 of the output shaft 53 for moving toward the projection direction is constant, then the rotating torque of the rotating lever 55 is constant, irrespective of the tilt angle θ of the rotating lever 55.

While the vehicle 10 is stopped, the compressed air is not introduced into the space within the inner space of the first cylinder 51 positioned on the I side of the first piston 52 in the axial direction. Therefore, the pressing force of the first spring 54 urges the first piston 52 and the output shaft 53 to move linearly toward the I side in the axial direction. Further, while the vehicle 10 is stopped, the compressed air is not introduced into the space within the inner space of the second cylinder 81 positioned on the H side of the second piston 82 in the axial direction. Therefore, the pressing force of the second spring 84 urges the second piston 82 and the drive shaft 83 to move linearly toward the H side in the axial direction. When the first piston 52 and the drive shaft 83 are in contact with each other, the first piston 52, the output shaft 53, the second piston 82, and the drive shaft 83 are acted on by the pressing force of the first spring 54 from the H side toward the I side in the axial direction and the pressing force of the second spring 84 from the I side toward the H side in the axial direction. The pressing force of the second spring 84 is larger than the pressing force of the first spring 54. Therefore, the drive force from the drive shaft 83 acting from the I side toward the H side in the axial direction is transmitted to the first piston 52 and the output shaft 53, such that the first piston 52 and the output shaft 53 also move linearly toward the H side in the axial direction. In the same manner as described above, the contact between the inner peripheral surface of the insertion hole 53A of the output shaft 53 and the roller 58 of the rotating lever 55 causes the rotating lever 55 to rotate about the rotation center P1 in one direction, or clockwise as viewed in Fig. 3. Accordingly, when the pressing force of the second spring 84 causes the drive shaft 83 to force the first piston 52 toward the rotating lever 55 side in the axial direction of the first cylinder 51, the output shaft 53 moves linearly toward the rotating lever 55 side, irrespective of the air pressure in the first cylinder 51. The fluid fed into and discharged from the first cylinder 51 is the air.

Advantageous effects of the embodiment will be now described.
(1) Theoretically, in the brake device 50, if the force F1 of the output shaft 53 for moving toward the projection direction is constant, then the rotating torque of the rotating lever 55 is constant, irrespective of the tilt angle θ of the rotating lever 55. Practically, since the output shaft 53 is in contact with the roller 58 of the rotating lever 55, and the roller 58 has a curved outer surface, the output shaft 53 does not necessarily contact with the rotating lever 55 at the contact point Y1 in the central axis of the output shaft 53. However, the output shaft 53 contacts with the rotating lever 55 at the contact position changing in accordance with the rotation of the rotating lever 55, whereby variation of the rotating torque of the rotating lever 55 can be inhibited. Further, since the variation of the rotating torque of the rotating lever 55 can be inhibited, it is also possible to inhibit the variation of the force of the two rotating arms 60 operated by the rotating lever 55 for sandwiching the disc 44. Accordingly, it is possible to inhibit variation of the braking force applied to the disc 44 caused by variation of the rotating torque of the rotating lever 55.
(2) In the brake device 50, the guide portion 52B extends from the diaphragm 52A of the first piston 52 in the axial direction of the first cylinder 51. Therefore, when the first piston 52 moves linearly in the inner space of the first cylinder 51, the first piston 52 can be inhibited from shaking relative to the axial direction of the first cylinder 51. As a result, the output shaft 53 can be prevented from shaking due to shaking of the first piston 52 and can move linearly along the axial direction of the first cylinder 51.
(3) In the brake device 50, the roller 58 of the rotating lever 55 is inserted in the insertion hole 53A of the output shaft 53. In addition, when the output shaft 53 moves in the axial direction of the first cylinder 51, the roller 58 of the rotating lever 55 rotates to change the contact position with the inner peripheral surface of the insertion hole 53A of the output shaft 53. Therefore, it is possible to reduce the resistance produced when the contact position between the output shaft 53 and the rotating lever 55 changes.
(4) In the brake device 50, when the output shaft 53 moves in the axial direction of the first cylinder 51, the roller 58 of the rotating lever 55 is in line contact with the inner peripheral surface of the insertion hole 53A of the output shaft 53. Therefore, it is possible to reduce the resistance produced when the contact position between the rotating lever 55 and the inner peripheral surface of the insertion hole 53A of the output shaft 53 changes, as compared to, for example, the configuration in which the rotating lever 55 is in surface contact with the inner peripheral surface of the insertion hole 53A of the output shaft 53.
(5) In the brake device 50, the rotating lever 55 is positioned such that the contact position between the portion of the inner peripheral surface of the insertion hole 53A of the output shaft 53 on the I side in the axial direction and the roller 58 of the rotating lever 55 changes within a range from a position on the I side in the axial direction relative to the rotation center P1 of the rotating lever 55 to a position on the H side in the axial direction relative to the rotation center P1 of the rotating lever 55. The contact position between the roller 58 of the rotating lever 55 and the inner peripheral surface of the insertion hole 53A of the output shaft 53 changes in the front-and-rear direction of the vehicle in accordance with the rotational position of the rotating lever 55. Specifically, as shown in Fig. 2, when the roller 58 of the rotating lever 55 is positioned on the I side in the axial direction relative to the rotation center P1 of the rotating lever 55, the contact position between the roller 58 of the rotating lever 55 and the inner peripheral surface of the insertion hole 53A of the output shaft 53 moves toward the J side in the front-and-rear direction of the vehicle as the rotating lever 55 rotates in one direction, or clockwise as viewed in Fig. 2. On the other hand, when the roller 58 of the rotating lever 55 is positioned on the H side in the axial direction relative to the rotation center P1 of the rotating lever 55, the contact position between the roller 58 of the rotating lever 55 and the inner peripheral surface of the insertion hole 53A of the output shaft 53 moves toward the K side in the front-and-rear direction of the vehicle as the rotating lever 55 rotates clockwise. In this way, during the clockwise rotation of the rotating lever 55, the contact position between the roller 58 of the rotating lever 55 and the inner peripheral surface of the insertion hole 53A of the output shaft 53 moves toward the J side in the front-and-rear direction of the vehicle and then moves toward the K side in the front-and-rear direction of the vehicle. Therefore, the range of rotation of the rotating lever 55 can be larger as compared to, for example, the configuration in which the contact position between the roller 58 of the rotating lever 55 and the inner peripheral surface of the insertion hole 53A of the output shaft 53 changes only in the region on the H side in the axial direction relative to the rotation center P1 of the rotating lever 55, even for the same contact range in which the roller 58 of the rotating lever 55 and the inner peripheral surface of the insertion hole 53A of the output shaft 53 contact with each other.
(6) In the brake device 50, when the first piston 52 and the output shaft 53 move toward the H side in the axial direction, the portion of the inner peripheral surface of the insertion hole 53A of the output shaft 53 on the I side in the axial direction contacts with the roller 58 of the rotating lever 55 for rotating the rotating lever 55 clockwise. On the other hand, when the first piston 52 and the output shaft 53 move toward the I side in the axial direction, the portion of the inner peripheral surface of the insertion hole 53A of the output shaft 53 on the H side in the axial direction contacts with the roller 58 of the rotating lever 55 for rotating the rotating lever 55 counterclockwise. Accordingly, rotation of the rotating lever 55 in both directions can be accomplished by the linear movement of the output shaft 53.
(7) The distance L1 from the rotation center P1 of the rotating lever 55 to the coupling center P2 between the rotating arm 60 and the rotating lever 55 is smaller than the shortest distance from the rotation center P1 of the rotating lever 55 to the contact position between the output shaft 53 and the roller 58 of the rotating lever 55. Therefore, the force acting on the rotating arm 60A from the rotating lever 55 in the tangential direction of the rotating arm 60A is larger than the force acting on the rotating lever 55 from the output shaft 53 in the tangential direction of the rotating lever 55. In this way, since the force acting on the rotating lever 55 from the output shaft 53 can be enlarged and then input to the rotating arm 60A, a large force acts on the mounting portion 65 and the brake pad 86 from the distal end portion of the rotating arm 60A in the tangential direction of the rotating arm 60A. This makes it possible to urge the mounting portion 65 and the brake pad 86 coupled with the rotating arm 60A against the end surface of the disc 44 with an adequate force, thereby applying a braking force exceeding a certain level to the disc 44.
(8) In the brake device 50, when the compressed air is not introduced from the air supply source 46 into the inner space of the first cylinder 51 and the inner space of the second cylinder 81, the drive force from the first piston 52 and the output shaft 53 produced by the air pressure is not transmitted to the rotating lever 55. Even when the drive force from the first piston 52 and the output shaft 53 produced by the air pressure is not transmitted to the rotating lever 55, the second piston 82 and the drive shaft 83 move linearly toward the H side in the axial direction by the pressing force of the second spring 84. The drive force from the second piston 82 and the drive shaft 83 produced by the second spring 84 is transmitted via the first piston 52 and the output shaft 53 to the rotating lever 55. The rotating lever 55 thus rotates by the drive force from the second piston 82 and the drive shaft 83 produced by the second spring 84. Accordingly, in the brake device 50, it is possible to inhibit the variation of the rotating torque for rotating the rotating lever 55 by the drive force from the second piston 82 and the drive shaft 83 produced by the second spring 84.

The above embodiment can be modified as described below. The above embodiment and the following modifications can be implemented in combination to the extent where they are technically consistent with each other.

In the above embodiment, it is possible to modify the range within which the contact position between the output shaft 53 and the roller 58 of the rotating lever 55 changes. For example, the contact position between the portion of the inner peripheral surface of the insertion hole 53A of the output shaft 53 on the I side in the axial direction and the roller 58 of the rotating lever 55 may change only in the region on the I side in the axial direction relative to the rotation center P1 of the rotating lever 55 or only in the region on the H side in the axial direction relative to the rotation center P1 of the rotating lever 55.

In the above embodiment, it is possible to modify the aspect of contact between the rotating lever 55 and the output shaft 53. For example, the rotating lever 55 may include a rotating body shaped like a polygonal column, instead of the roller 58 shaped like a substantially circular column. In this configuration, the rotating body of the rotating lever 55 shaped like a polygonal column should be rotatable, such that the rotation of the rotating body can reduce the resistance produced when the contact position between the output shaft 53 and the rotating lever 55 changes.

The rotating lever 55 may include, for example, a spherical rotating body. In this configuration, the spherical rotating body of the rotating lever 55 should also be rotatable. In addition, the spherical rotating body also serves as a curved surface portion that comes into point contact with the inner peripheral surface of the insertion hole 53A of the output shaft 53.

Further, it is also possible that the lever body 57 of the rotating lever 55 and the inner peripheral surface of the insertion hole 53A of the output shaft 53 contact with each other without using the roller 58 of the rotating lever 55. In this configuration, the lever body 57 of the rotating lever 55 slides on the inner peripheral surface of the insertion hole 53A of the output shaft 53 to change the contact position, while the rotating lever 55 rotates. In this configuration, it is also possible that the distal end portion of the lever body 57 of the rotating lever 55 serves as a curved surface portion having a curved surface, or the lever body 57 of the rotating lever 55 and the inner peripheral surface of the insertion hole 53A of the output shaft 53 are provided with a coating to reduce the sliding resistance between them.

Alternatively, the output shaft 53 may include a roller, in place of the roller 58 of the rotating lever 55. The lever body 57 of the rotating lever 55 may contact with the roller provided on the distal end portion of the output shaft 53.

In the above embodiment, the output shaft 53 accomplishes the rotation of the rotating lever 55 in both directions, but it is also possible that the output shaft 53 accomplishes the rotation of the rotating lever 55 only in one direction. For example, the rotating lever 55 is positioned such that the roller 58 of the rotating lever 55 contacts with the distal end surface of the output shaft 53. A spring is attached on the H side in the axial direction relative to the roller 58 of the rotating lever 55 such that the spring presses the roller 58 of the rotating lever 55 against the distal end surface of the output shaft 53. In this configuration, when the output shaft 53 moves toward the H side in the axial direction, the output shaft 53 forces the roller 58 of the rotating lever 55 toward the H side in the axial direction against the pressing force of the spring, such that the rotating lever 55 rotates clockwise. On the other hand, when the output shaft 53 moves toward the I side in the axial direction, the pressing force of the spring forces the roller 58 of the rotating lever 55 toward the I side in the axial direction, such that the rotating lever 55 rotates counterclockwise. In this configuration, the insertion hole 53A of the output shaft 53 may be removed.

In the above embodiment, the distance L1 from the rotation center P1 of the rotating lever 55 to the coupling center P2 between the rotating arm 60 and the rotating lever 55 may be modified. For example, the distance L1 from the rotation center P1 of the rotating lever 55 to the coupling center P2 between the rotating arm 60 and the rotating lever 55 may be larger than the shortest distance from the rotation center P1 of the rotating lever 55 to the contact position between the output shaft 53 and the roller 58 of the rotating lever 55. In this configuration, a braking force exceeding a certain level can be applied to the disc 44 if the force acting from the output shaft 53 onto the roller 58 of the rotating lever 55 is sufficiently large.

In the above embodiment, the configuration of the first piston 52 may be modified. For example, the guide portion 52B does not necessarily extend from the entire periphery of the outer edge of the diaphragm 52A, but may be extend from a part of the outer edge of the diaphragm 52A.

Further, for example, the guide portion 52B may be removed from the first piston 52. In this configuration, since the outer edge of the diaphragm 52A of the first piston 52 contacts with the inner peripheral surface of the first cylinder 51, the first piston 52 can be inhibited from shaking in the first cylinder 51 to some degree.

In the above embodiment, it is possible to modify the aspect of coupling from the rotating lever 55 to the brake pad 86. For example, an additional member may be interposed between the rotating arm 60A and the mounting portion 65.

The present disclosure encompasses the following implementation examples. In the following implementation examples, the reference signs denoting some elements of the illustrative embodiment are used for assistance in understanding instead of limitation. Part of the matters included in the following implementation examples may be omitted, and some of the matters included in the following implementation examples may be selected or extracted for combination.

### Example 1

Some implementation examples are directed to a brake device 50 in which when a piston 52 moves linearly along the axial direction of a cylinder 51, a friction member 86 is contacted with a brake-applied member 44 to produce a friction braking force. The brake device 50 may include:
an output shaft 53 configured to move linearly together with the piston 52; and
a rotating lever 55 configured to rotate about a rotation center P1 in accordance with the movement of the output shaft 53, so as to change the relative positions of the friction member 86 and the brake-applied member 44 relative to each other,
   and the brake device 50 may also include a connection element 58 for connecting the output shaft 53 and the rotating lever 55 so as to be movable relative to each other, the connection element 58 being non-rigidly connected to one or both of the output shaft 53 and the rotating lever 55.

### Example 2

In some implementation examples, the connection element 58 may be connected to one or both of the output shaft 53 and the rotating lever 55 with a mechanical play.

### Example 3

In some implementation examples, the connection element 58 may be configured to move along a direction intersecting or orthogonal to the axial direction of the cylinder 51 when the output shaft 53 moves along the axial direction of the cylinder 51.

### Example 4

In some implementation examples, the connection element 58 may be configured to frictionally contact with one or both of the output shaft 53 and the rotating lever 55 in accordance with the movement of the output shaft 53.

### Example 5

In some implementation examples, the connection element 58 may be or include a roller having a curved outer peripheral surface that contacts with one of the output shaft 53 and the rotating lever 55.

### Example 6

In some implementation examples, the curved outer peripheral surface of the roller may have a certain radius of curvature.

### Example 7

In some implementation examples, the rotating lever 55 may include a lever body 57 that projects radially relative to the rotation center P1, and the connection element 58 may be attached to the distal end or a portion around the distal end of the lever body 57 so as to be freely rotatable relative to the lever body 57.

### LIST OF REFERENCE NUMBERS

- θ: tilt angle
- F1: force
- F2: force
- L1: distance
- P1: rotation center
- P2: coupling center
- X1: distance
- X2: distance
- Y1: contact point
- 10: vehicle
- 20: vehicle body
- 30: air suspension
- 41: bogie
- 42: axle
- 43: wheel
- 44: disc
- 46: air supply source
- 47: control valve
- 48: supply channel
- 50: brake device
- 51: first cylinder
- 51A: through-hole
- 51B: through-hole
- 52: first piston
- 52A: diaphragm
- 52B: guide portion
- 53: output shaft
- 53A: insertion hole
- 54: first spring
- 55: rotating lever
- 56: circular portion
- 57: lever body
- 58: roller
- 60: rotating arm
- 65: mounting portion
- 70: bracket
- 75: gap adjustment mechanism
- 76: coupling pin
- 81: second cylinder
- 81A: through-hole
- 82: second piston
- 83: drive shaft
- 84: second spring
- 86: brake pad
- 90: control device

## Claims

1. A brake device (50) comprising:
an output shaft (53) configured to move linearly along an axial direction of a cylinder (51) together with a piston (52); and
a rotating lever (55) for driving a rotating arm (60) by a force received from the output shaft (53), the rotating arm (60) being configured to change relative positions of a friction member (86) and a brake-applied member (44) relative to each other,
wherein the rotating lever (55) includes a lever contact portion (58) configured to contact with the output shaft (53) at a contact position changing while the output shaft (53) moves linearly.

2. The brake device (50) according to claim 1,
wherein a contact portion of the output shaft (53) and a contact portion of the lever contact portion (58) are in line contact or point contact with each other, and
wherein at least one of the contact portion of the output shaft (53) and the contact portion of the lever contact portion (58) includes a curved surface portion having a curved surface.

3. The brake device (50) according to claim 1 or 2, wherein at least one of the output shaft (53) and the lever contact portion (58) includes a rotating body (58) configured to rotate.

4. The brake device (50) according to any one of claims 1 to 3,
wherein the rotating lever (55) is configured to rotate about a rotation center (P1), and
wherein, with a projection direction (H) referring to a direction toward which the output shaft (53) projects from the cylinder (51) in the axial direction of the cylinder (51), and a counter projection direction (I) referring to a direction opposite to the projection direction (H), the rotating lever (55) is positioned such that the contact position between the output shaft (53) and the lever contact portion (58) changes within a range from a position on a counter projection direction (I) side relative to the rotation center (P1) of the rotating lever (55) to a position on a projection direction (H) side relative to the rotation center (P1) of the rotating lever (55).

5. The brake device (50) according to any one of claims 1 to 4, wherein the piston (52) includes:
a diaphragm (52A) partitioning an inner space of the cylinder (51) in the axial direction of the cylinder (51); and
a guide portion (52B) extending from an outer edge of the diaphragm (52A) in the axial direction of the cylinder (51).

6. The brake device (50) according to any one of claims 1 to 5, wherein, with a projection direction (H) referring to a direction toward which the output shaft (53) projects from the cylinder (51) in the axial direction of the cylinder (51), and a counter projection direction (I) referring to a direction opposite to the projection direction (H), the rotating lever (55) rotates in one direction while the output shaft (53) moves linearly toward the projection direction (H), whereas the rotating lever (55) rotates in the other direction while the output shaft (53) moves linearly toward the counter projection direction (I).

7. The brake device (50) according to claim 6, wherein the output shaft (53) includes:
a first contact portion configured to contact with the rotating lever (55) at a cylinder (51) side in the axial direction of the cylinder (51); and
a second contact portion configured to contact with the rotating lever (55) at an opposite side to the cylinder (51) in the axial direction of the cylinder (51).

8. The brake device (50) according to any one of claims 1 to 7,
wherein the output shaft (53) moves linearly in the axial direction of the cylinder (51) as a fluid is fed into and discharged from the cylinder (51),
wherein the brake device (50) further includes:
a drive shaft (83) positioned coaxially with the output shaft (53) on an opposite side to the rotating lever (55) with respect to the output shaft (53); and
an elastic member (84) for pressing the drive shaft (83) toward the output shaft (53) in the axial direction of the cylinder (51), and
wherein when a pressing force of the elastic member (84) causes the drive shaft (83) to force the output shaft (53) or the piston (52) toward a rotating lever (55) side in the axial direction of the cylinder (51), the output shaft (53) is capable of moving linearly toward the rotating lever (55) side, irrespective of a fluid pressure in the cylinder (51).
